# EUROPEAN PATENT APPLICATION

(11) **EP 4 506 263 A1**
(43) Date of publication of application: **12.02.2025**
(21) Application number: 23461635.7
(22) Date of filing: 10.08.2023
(51) Int. Cl.: B64D 33/10, B64D 15/02, B64D 41/00

(54) **COOLANT WING SURFACE HEAT EXCHANGER**

(71) Applicant: Goodrich Corporation, Charlotte, NC 28217 (US)
(72) Inventor: KRUCZEK, Grzegorz, 51-317 Wroc aw (PL)
(74) Representative: Dehns

(57) **Abstract**

An aircraft wing (10) incorporating a coolant loop (20, 30) through which a coolant flows, the coolant loop being a closed loop, and wherein a part of the closed loop is formed within a body of the aircraft wing.

## Description

### TECHNICAL FIELD

The present disclosure is concerned with providing a closed loop coolant flow path for an aircraft fuel cell.

### BACKGROUND

There is increasing pressure on the aerospace industry to switch the primary fuel for aircraft from hydrocarbons to more sustainable energy sources such as hydrogen. Hybrid fuel cell gas turbine systems, for example, include a gas turbine system and also use electric power generated by a fuel cell. Such systems comprise low-temperature fuel cells (e.g. proton exchange membrane fuel cells (PEMFCs)) that can increase fuel-to-electricity conversion efficiency and lower emissions of greenhouse gases. Hybrid fuel cell gas turbine systems use compressed gas/air to drive a turbine to drive an aircraft propeller and also use electric power that is generated by a hydrogen fuel cell. Improvements have been made possible in relation to the use of compact and efficient fuel cells by the ability to store sufficient hydrogen in a compressed and/or liquid form. The hydrogen required to generate electricity from the fuel cell is typically stored in a tank. This is made feasible by technologies that enable hydrogen to be cryogenically compressed for storage or to be stored in liquid form. The compression of hydrogen for storage requires the hydrogen to be very highly compressed (e.g. between 300 - 850 bar and less than 78K) or to be cryogenically cooled to liquid state at temperatures below 20K. Such low temperatures, however, are typically only needed to allow efficient storage of the hydrogen. The hydrogen then needs to be heated, in the system, for use by the fuel cell. For improved functioning of the hydrogen-engine, or improved functioning of a fuel cell, the hydrogen fuel needs to reach higher temperatures (> 0°C = 273K). Not only the fuel cell, but also other parts of the aircraft power systems e.g. the compressor and turbine oil, generate high temperatures. Cooling is therefore required.

A fuel cell requires cooling which is typically provided by a coolant loop such as a closed loop through which a coolant flows whereby the coolant exchanges heat with the fuel cell stack. Typically, the amount of heat transported from the fuel cell to the coolant is approximately 25% of the source energy. Due to the heat exchange, the coolant becomes hotter. Coolant used to cool other parts of a power system also becomes hot during use. The coolant either needs to be replaced (which, for a closed loop system requires downtime) or cooled in some way such that the heat contained in the heated coolant is ejected e.g. to ambient. If the heat from the coolant can be effectively and efficiently removed, the coolant loop could also be used to collect waste heat from other parts of the system, not just the fuel cell.

There is, therefore, a need for an improved way of removing heat from coolant in a closed cooling loop, particularly, but not exclusively, for cooling a fuel cell, and, preferably, to also be able to make use of that heat.

### SUMMARY

Accordingly, there is provided a method of removing heat from a coolant in a closed coolant loop, the method comprising integrating part of the closed coolant loop in the body of an aircraft wing and passing the coolant, as part of the coolant loop, through the body of the aircraft wing.

There is also provided an aircraft wing incorporating a coolant loop through which a coolant flows, the coolant loop being a closed loop, and wherein a part of the closed loop is formed within a body of the aircraft wing.

### BRIEF DESCRIPTION

Examples of a cooling looped method and arrangement will be described by way of example only, with reference to the drawings. It should be noted that these are examples only, and variations are possible within the scope of the claims.
Figure 1 shows a partial view of an aircraft wing incorporating a cooling loop in accordance with the disclosure.
Figure 2 shows an alternative example of an aircraft wing incorporating a cooling loop in accordance with the disclosure.

### DETAILED DESCRIPTION

The use of a closed coolant loop to cool aircraft systems, such as a fuel cell, will not be described further here, since this is known in the art. Typically, the coolant loop comprises fluid lines arranged in a closed fluid path loop adjacent lines or parts which generate heat and need to be cooled. The coolant (a fluid/liquid/gas such as water, air or other known coolant) flows around the closed loop and exchanges heat with the hot parts to be cooled. The hot parts therefore become cooler as the heat from them passes to the coolant, which leads to the coolant becoming hotter. The coolant loop may be for cooling a fuel cell and/or for cooling other aircraft power system parts such as, but not only, compressor and turbine systems which generate heat in hydraulic fluid e.g. water and/or oil.

According to the present disclosure, at least part of the closed coolant loop passes through at least part of the body of an aircraft wing, as will be described further below. The body of the wing therefore acts as a heat exchanger with the coolant in that part of the coolant loop, such that heat from the coolant passes to the wing body, from where it can be ejected from the wing body to ambient. With this technique, the coolant is cooled as it passes through the wing so that it can continue to perform its cooling function. Furthermore, by using the heat that transfers from the coolant to the wing body, the temperature of the wing body increases, which can prevent icing on the wing. Because the technique provides an effective way of removing heat from the coolant and ejecting it to ambient, the coolant loop can also be arranged to collect waste heat from several parts of the aircraft system, and more than is the case with conventional coolant loops.

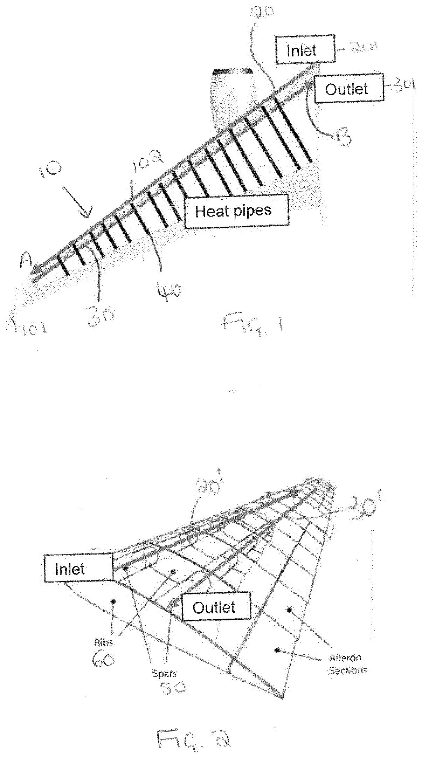

An example of the use of the aircraft wing to exchange heat with the coolant will be described with reference to Fig. 1 which shows a part of an aircraft wing 10. The example here shows the wing tip 101 and leading edge 102. This is just one example of where, in the wing, the coolant loop can be incorporated and the coolant loop could be arranged more centrally, closer to the trailing edge etc. The location is not limited to any one example.

The coolant arrangement of this disclosure includes one or more coolant conduits integrated into the body of the wing. The coolant conduits form a part of the closed coolant loop through which the coolant continuously flows. In this example, two coolant conduits 20, 30 are provided. In the example, the conduits 20, 30 are located adjacent each other and close to or at the leading edge 102 of the wing body 10. This arrangement has the advantage that the wing efficiency is improved due to a thicker laminar boundary layer and, therefore, lower fuel consumption. Also, if, as in this example, the hot coolant conduit 20 is closer to the leading edge than the colder, return, fluid conduit 30, the efficiency of the heat transfer is improved, since the leading edge is cooler/in direct contact with ambient. The conduits may be provided along the entire length of the wing body 10 or less than the entire length. In the example shown, hot coolant, which has become hot by performing its cooling function at e.g. the fuel cell, and has, therefore, received heat by heat exchange with the high temperature parts of the system, flows into the parts of the coolant loop that forms the hot coolant conduit 20, in the direction indicated by arrow A, from an inlet end 201 of that conduit. The wing body 10, exposed to ambient, is cold and therefore performs heat exchange with the hot coolant, causing the wing body temperature to increase and the coolant temperature to decrease. The cooled coolant then returns along the wing body via the other conduit 30 in the direction of arrow B where it flows into the other parts of the coolant loop from outlet 301. The coolant has, therefore, had some of the heat that was generated in it due to its cooling function removed by heat transfer with the wing body. At the same time, the wing body is warned by that heat to prevent icing on the wing.

Heat transfer between the coolant and the wing body 10 can, in one example, be further enhanced by the provision of heat pipes 40 or struts of heat conductive material. The heat from the coolant coming into contact with the heat pipes 40 causes the heat to conduct along the pipes 40 across other parts of the wing body 10. In the example shown, the heat pipes 40 extend across the width of the wing, but other arrangements and dimensions of pipes are possible. The heat pipes may just be strips of heat conductive material. It is also feasible for these to be conduits through which the coolant flows before exiting the wing 10. It is also feasible that the coolant could make several passes along the wing.

In a preferred example, the coolant conduit(s) 20, 30 in the wing are actually hollow tubes that already exist in the wing body. Aircraft wings are often fabricated with such hollow tubes or channels to reduce the overall cost and weight of the wing. Where such hollow channels already exist in the wing, these can form the coolant conduits. Otherwise, conduits can be formed in or even on the wing body for the coolant flow, but this is less desirable.

In another example, such as shown in Fig. 2, the spars 50 of the wing may be used to transport the hot coolant along the wing body 10. Typically, aircraft wings are formed with spars 50 along their length and ribs 60 across their width, supporting the spars 50. As the spars 50 are typically hollow, they can act as conduits 20', 30' for the coolant. The ribs 60 may also acts as heat pipes to distribute the heat across the wing (like the heat pipes 40 mentioned above). This makes use of the existing wing structure to form the coolant loop.

Only two examples have been described, but it will be clear that different configurations of conduits/pipes are possible and the arrangement can be optimised depending on weight etc. to ensure the required heat transfer.

The remainder of the coolant loop has not been shown or described, since this can take any known configuration and may or may not include valves, bypass lines or the like.

## Claims

1. A method of removing heat from a coolant in a closed coolant loop, the method comprising integrating part of the closed coolant loop in the body of an aircraft wing (10) and passing the coolant, as part of the coolant loop, through the body of the aircraft wing.

2. The method of claim 1, further comprising passing the coolant along a first conduit (20) along a part of a length of the wing in a first direction and then back along a second conduit (30 in a second, opposite direction.

3. An aircraft wing incorporating a coolant loop through which a coolant flows, the coolant loop being a closed loop, and wherein a part of the closed loop is formed within a body of the aircraft wing

4. The aircraft wing of claim 3, the coolant loop comprising one or more coolant conduits (20, 30) extending along the body of the aircraft wing for flow of the coolant therethrough.

5. The aircraft wing of claim 4, the one or more coolant conduits comprising a first coolant conduit (20) for flow of a hot coolant and a second coolant conduit (30) for flow of a cooled coolant conduit after teat exchange between the hot coolant and the wing body.

6. The aircraft wing of claim 4 or 5, wherein the one or more coolant conduits extend adjacent a leading edge of the aircraft wing.

7. The aircraft wing of claim 6, when dependent on claim 5, wherein the first coolant channel is closer to the leading edge than the second coolant channel.

8. The aircraft wing of claim 4 or 5, wherein the one or more coolant conduits define a wavy or angled path relative to a leading edge of the aircraft wing.

9. The aircraft wing of any of claims 3 to 8, further comprising heat conductive members (40) extending across the body of the wing to conduct heat from the coolant across the wing.

10. The aircraft wing of claim 9, wherein the heat conductive members are ribs (60) across the width of the wing body.

11. The aircraft wing of any of claims 3 to 10, wherein the coolant loop is formed by spars (50) along the aircraft wing.

12. An aircraft having one or more aircraft wings (10) as claimed in any of claims 3 to 11.

13. The aircraft of claim 12 having a fuel cell, and wherein the coolant loop is arranged to cool the fuel cell.

14. The aircraft of claim 12 or 13, wherein the coolant loop is arranged to cool components, machines and/or devices on the aircraft.
